# FASCICULE DE BREVET EUROPEEN

(11) **EP 3 067 517 B1**
(45) Date de publication et mention de la délivrance du brevet: **08.11.2017**
(21) Numéro de dépôt: 16159537.6
(22) Date de dépôt: 10.03.2016
(51) Int. Cl.: A62C 3/00, F16L 11/04, F16L 31/00, F16L 55/10, E21F 1/04, E21F 1/06

(54) **CONDUIT D'AERATION SOUPLE DISJONCTABLE ET DISPOSITIF DE SEPARATION DE CONDUIT**
ABNEHMBARE FLEXIBLE LÜFTUNGSLEITUNG, UND TRENNVORRICHTUNG DIESER LEITUNG
FLEXIBLE AERATION DUCT SUITABLE FOR BEING SWITCHED AND DUCT-SEPARATION DEVICE

(30) Priorité: 13.03.2015 FR 1500506
(43) Date de publication de la demande: 14.09.2016
(73) Titulaire: Sema, 92000 Nanterre (FR)
(72) Inventeur: LAUBIE, Charles, 1150 BRUXELLES (BE)
(74) Mandataire: Cabinet Netter

(56) Documents cités:
- EP-A1- 2 390 462
- CN-Y- 2 135 062
- FR-A1- 2 960 136

## Description

L'invention a trait à un conduit et à un kit de conduit d'aération souple et disjonctable. Ce type de conduit d'aération est utilisé en particulier lors du percement de tunnels. Lorsque l'on fore un tunnel, une conduite hydraulique, une galerie de mine ou toute autre galerie souterraine requérant une intervention humaine sur site, on doit faire arriver de l'air frais à proximité du front de forage.

Pour ce faire, on utilise généralement un conduit d'aération, aussi appelé gaine d'aération dans la technique, menant de l'extérieur du forage, à l'air libre, au front de forage. On peut alors souffler ou aspirer de l'air, frais ou vicié, à travers ce conduit. Le conduit d'aération est rallongé à mesure que le front de forage avance. Traditionnellement, un tel conduit d'aération est construit par aboutement mutuel de tronçons élémentaires tubulaires.

C'est pourquoi, on pratique aujourd'hui des conduits d'aération en déployant un long tuyau souple et fin, le plus souvent en matière textile. Un tel tuyau est généralement appelé "ventube" dans la technique. On peut se référer au document FR 2 960 617 de la demanderesse, notamment sur le déploiement et l'allongement du tuyau.

Le document CN 20135062 Y décrit un tube flexible à extrémités munies d'une fermeture à crémaillère et à double recouvrement des bords libres.

Un problème reste absent de l'état de la technique : la sécurité incendie. Un incendie dans une galerie fermée présente un très grave danger pour les opérateurs et accessoirement pour le matériel. Une intervention de pompiers doit être facilitée le plus efficacement possible. Ainsi, le besoin se fait sentir de mettre la ventilation à la disposition des pompiers. Jusqu'à présent, les tuyaux flexibles de ventilation étaient susceptibles de brûler. On peut, bien sûr, envisager des tuyaux flexibles ignifugés ; mais leur coût est très élevé. Or, une ventilation pour une galerie peut s'étendre sur plusieurs kilomètres de longueur.

La demanderesse a mis au point un système de sécurité permettant de créer une solution de continuité dans un conduit souple d'aération. Le système permet également d'utiliser la ventilation pour désenfumer la zone de progression des pompiers.

Le conduit d'aération souple disjonctable comprend une première et une deuxième section de tuyaux reliés entre elles et un organe de liaison à disjonction par câble. L'organe de liaison comprend une première partie présentant un contour fermé, lié à la première section, une deuxième partie présentant un contour fermé, lié à la deuxième section, et un système de fermeture séparable. L'organe de liaison comprend un fil de disjonction des première et deuxième parties par ouverture du système de fermeture. Le fil est disposé en partie à l'intérieur et à proximité des première et deuxième parties. Le fil comprend une portion reliée à la deuxième partie et une extrémité libre en saillie hors des première et deuxième parties. Ainsi, en tirant sur l'extrémité libre du fil, un opérateur peut séparer les première et deuxième parties de l'organe de liaison provoquant ainsi une séparation des première et deuxième sections de tuyaux.

En effet, la ventilation dans les travaux souterrains comprend en général des tronçons de gaines souples de ventilation assemblés bout à bout et pouvant constituer des longueurs élevées. Les tronçons sont accrochés en partie haute des tunnels par des attaches de suspension pour permettre le passage d'engins et de véhicules en-dessous. Les conduits d'aération peuvent être avec une armature notamment spiralée, permettant l'aspiration et le soufflage, ou dépourvus d'armature pour le soufflage seulement. Les sections de tuyaux peuvent être reliées entre elles par différents systèmes tels que des fermetures séparables, cercles avec ou sans collier, attaches à bande auto-agrippante, etc. Ainsi, la séparation par disjonction de deux sections de tuyaux, le plus près possible de l'incendie, évite la propagation du feu par le conduit d'aération. Il permet de sauvegarder l'essentiel du conduit d'aération. Il permet aussi d'utiliser le système de ventilation déconnecté pour désenfumer le front de lutte contre l'incendie. Bien entendu, la disjonction de deux sections de tuyaux est rapide. Ceci est obtenu par le fil de disjonction prédisposé. Une traction exercée sur le fil de disjonction provoque la séparation de l'organe de liaison et la séparation de deux sections de tuyaux. L'organe de liaison peut être disposé à espaces réguliers le long d'un conduit souple d'aération. L'organe de liaison possède une aptitude à la disjonction indépendante de la fixation entre ledit organe de liaison et les deux sections de tuyaux voisines.

Dans un mode de réalisation, le fil de disjonction est ininflammable. Le fil de disjonction peut être à base de fibres aramides. Le fil de disjonction peut être métallique. Le fil de disjonction peut être en acier.

Dans un mode de réalisation, le fil de disjonction présente une résistance à leur rupture supérieure à 1500 N.

Dans un mode de réalisation, l'organe de liaison comprend une navette pour rassembler les première et deuxième parties à partir d'un état préalable non assemblé. La navette présente une trajectoire sur le pourtour des première et deuxième parties.

Dans un mode de réalisation, l'organe de liaison comprend une fermeture à crémaillère. Ainsi, le fil de disjonction est disposé à l'intérieur de la fermeture à crémaillère et, lors de son actionnement, vient progressivement séparer les dents de la crémaillère qui sont en prise en position fermée. Le fil de disjonction peut être ondulé avec une période adaptée à la période des dents de la fermeture à crémaillère. Les dents peuvent être découplées plus aisément en cas d'activation du fil de disjonction.

Dans un autre mode de réalisation, l'organe de liaison comprend une fermeture à glissière spirale. La disjonction est similaire à celle d'une fermeture à crémaillère.

Dans un autre mode de réalisation, l'organe de liaison comprend une fermeture à glissière droite. Dans ce cas, la navette permet de faire pénétrer l'un dans l'autre un profilé mâle et un profilé femelle, généralement en forme de queue d'aronde. Le fil de disjonction provoque la séparation du profilé mâle et du profilé femelle.

Dans un autre mode de réalisation, l'organe de liaison comprend une fermeture par cerclage ou clipsage. Le cerclage peut s'entendre d'un cercle pouvant se resserrer par levier ou cliquet autour d'un autre cercle de l'autre partie de l'organe de liaison. Le fil de disjonction est alors relié au levier ou aux clips.

Dans un mode de réalisation, le conduit comprend deux fils disposés d'un côté et de l'autre des première et deuxième parties. Le conduit étant globalement de forme circulaire, à l'état prêt à l'emploi, on dispose de deux fils au sommet de l'organe de liaison de manière que l'un puisse venir disjoncter l'organe de liaison d'un côté et l'autre puisse venir disjoncter l'organe de liaison de l'autre côté. Les fils se rejoignent en partie basse éventuellement avec un câble et une poignée de traction commun.

Dans un autre mode de réalisation, le conduit comprend un fil avec deux brins disposés d'un côté et de l'autre des première et deuxième parties. Le conduit étant globalement de forme circulaire, à l'état prêt à l'emploi, on dispose de deux brins au sommet de l'organe de liaison de manière que l'un puisse venir disjoncter l'organe de liaison d'un côté et l'autre puisse venir disjoncter l'organe de liaison de l'autre côté. Les brins se rejoignent dans les première et deuxième parties, par exemple en étant fixés à la deuxième partie en zone inférieure du conduit. Les brins se rejoignent sous les sections de tuyau, éventuellement avec un câble et une poignée de traction commun.

Dans un mode de réalisation, la deuxième section de tuyau est non supportée sur une longueur au moins égale à son diamètre, à partir de l'organe de liaison, la deuxième partie de l'organe de liaison étant également non supportée. En d'autres termes, le conduit étant en général muni d'attaches de suspension, on omet une ou plusieurs attaches de suspension du côté de la deuxième section du tuyau et à proximité de l'organe de liaison de sorte que la disjonction de l'organe de liaison provoque sous l'effet de leurs propres masses, une chute de la deuxième partie de l'organe de liaison et de l'extrémité de la deuxième section de tuyaux sensiblement jusqu'à la position de la première attache de suspension prévue ainsi qu'un retrait dans le sens horizontal. Dès lors, les deux sections de tuyaux sont séparées d'une distance suffisante, par exemple d'environ 100 à 200 % du diamètre du conduit. Ladite longueur peut être ajustée en fonction du type de conduit, en la choisissant plus importante pour un conduit à armature susceptible de supporter une aspiration, notamment à armature spiralée et une longueur inférieure pour un conduit souple dépourvu d'armature et dont la chute vers le bas sera plus franche. Ainsi, l'extrémité de la deuxième section du tuyau et la deuxième partie de l'organe de liaison sont, en position de service, tenues en place par la portion voisine de la deuxième section du tuyau et la première partie de l'organe de liaison respectivement.

Dans un autre mode de réalisation, le conduit comprend au moins un crochet à découplage supportant la deuxième section de tuyau au voisinage de la deuxième partie de l'organe de liaison, la deuxième partie de l'organe de liaison étant non supportée, ledit crochet étant à découplage commandé par ledit fil. Le crochet à découplage peut comprendre une pièce mâle, une pièce femelle et une goupille maintenant la pièce mâle et la pièce femelle accouplées. Avantageusement, la goupille est reliée au fil. Ainsi, une traction sur le fil provoque le retrait de la goupille, et le découplage du crochet, notamment avant la disjonction de l'organe de liaison. La goupille reste attachée au fil et est réutilisable.

Dans un mode de réalisation, le conduit comprend au moins un organe de maintien d'une extrémité de l'organe de liaison. L'organe de maintien peut être posé après retrait de la navette. En effet, la navette permet de joindre la première et la deuxième partie de l'organe de liaison. La navette peut être retirée au bout de sa course et l'organe de liaison stabilisé par la pose d'un organe de maintien. Que ce soit pour une fermeture à crémaillère ou une fermeture à glissière, l'organe de liaison comprend une zone d'entrée pour la navette et une zone de sortie. L'organe de maintien peut être une agrafe.

Dans un mode de réalisation, le conduit comprend au moins deux organes de maintien, l'un à chaque extrémité de l'organe de liaison, dans le sens du parcours de la navette. Le premier organe de maintien peut être posé après l'engagement de la navette dans la zone d'entrée. Le deuxième organe de maintien peut être posé après le retrait de la navette dans la zone de sortie.

Dans un mode de réalisation, le fil est apte à arracher au moins un organe de maintien de l'organe de liaison.

Dans un mode de réalisation, l'organe de maintien est une patte de maintien d'une extrémité de l'organe de liaison.

Dans un mode de réalisation, le conduit comprend une patte de maintien à bouton pression. La patte à bouton pression peut être ouverte par le fil.

Dans un mode de réalisation, le conduit comprend une patte de maintien à bande adhésive. La patte à bande adhésive peut être arrachée par le fil.

Dans un mode de réalisation, le conduit comprend une patte adhésive sécable de maintien. La patte adhésive sécable peut être installée à la place de l'agrafe. La patte adhésive sécable peut être coupée par le fil. La patte adhésive sécable peut comprendre une amorce de coupure. La patte adhésive sécable peut comprendre une portion de silicone aisée à sectionner.

Dans un mode de réalisation, le conduit comprend une patte de maintien à accrochage par crochets et boucles ou auto-agrippante. La patte auto-agrippante peut être installée à la place de l'agrafe. La patte auto-agrippante peut être ouverte par le fil. Une traction sur le fil provoque la séparation des crochets d'avec les boucles.

Dans un mode de réalisation, à l'état fonctionnel assemblé du conduit, la navette est retirée. Ainsi, le conduit à l'état monté peut se présenter sous une forme comprenant une première et une deuxième section de tuyaux reliées entre elles et un organe de liaison à disjonction par câble, ledit organe de liaison comprenant une première partie présentant un contour fermé, lié à la première section, une deuxième partie présentant un contour fermé, lié à la deuxième section, les première et deuxième parties étant assemblées entre elles de manière séparable sur le pourtour des première et deuxième parties, et un fil de disjonction des première et deuxième parties, disposé en partie à l'intérieur et à proximité des première et deuxième parties, le fil comprenant une portion reliée à la deuxième partie et une extrémité libre en saillie hors des première et deuxième parties.

Un kit de conduit souple disjonctable d'aération comprend un organe de liaison à disjonction par câble. L'organe de liaison comprend une première partie présentant un contour fermé et une deuxième partie présentant un contour fermé. La première partie est équipée d'un élément de fixation à une première section de tuyau. La deuxième partie est équipée d'un élément de fixation à une deuxième section de tuyau. Les première et deuxième parties étant aptes à être assemblées entre elles de manière séparable sur le pourtour des première et deuxième parties. Le kit comprend un fil de disjonction des première et deuxième parties. Le fil est disposé en partie à l'intérieur et à proximité des première et deuxième parties. Le fil comprend une portion reliée à la deuxième partie et une extrémité libre en saillie hors des première et deuxième parties. Le kit peut comprendre un organe de maintien d'une extrémité de l'organe de liaison.

Le kit peut comprendre également une navette pour rassembler les première et deuxième parties à partir d'un état préalable et non assemblé. La navette présente une trajectoire sur le pourtour des première et deuxième parties.

D'autres caractéristiques et avantages de l'invention apparaîtront à la lecture de la description détaillée ci-après et des dessins annexés, sur lesquels :
- la figure 1 est une vue de côté en élévation d'un conduit souple d'aération en position de service ;
- la figure 2 est une vue de côté en élévation d'un conduit souple d'aération en position disjonctée ; et
- la figure 3 est une vue agrandie d'un exemple d'organe de liaison et de fil de disjonction; et
- la figure 4 est une vue d'un crochet de suspension de conduit souple disjonctable.

Pour l'essentiel, les dessins annexés comprennent des éléments de caractère certain. Ils pourront donc être utilisés pour la définition de l'invention, le cas échéant.

La demanderesse se réfère à US 2006/231 689 traitant du support de tuyaux de même que US 6 719 247. FR 2 410 202 propose une armature hélicoïdale pour une gaine flexible. WO 2007/812 216 propose une gaine suspendue à un rail en vue d'un déploiement ou d'un retrait. Enfin, CA 2 421 334 concerne un tuyau flexible de ventilation équipé d'une pluralité d'éléments de fixation au tuyau voisin pour une connexion étanche. Rien ne vise à améliorer la sécurité incendie. Plus particulièrement rien ne vise à empêcher une propagation de feu par la gaine souple d'aération. La demanderesse a mis au point un coupe-feu pour gaine souple d'aération. Le coupe-feu est actif par séparation physique créant un espace entre deux parties de gaine souple d'aération.

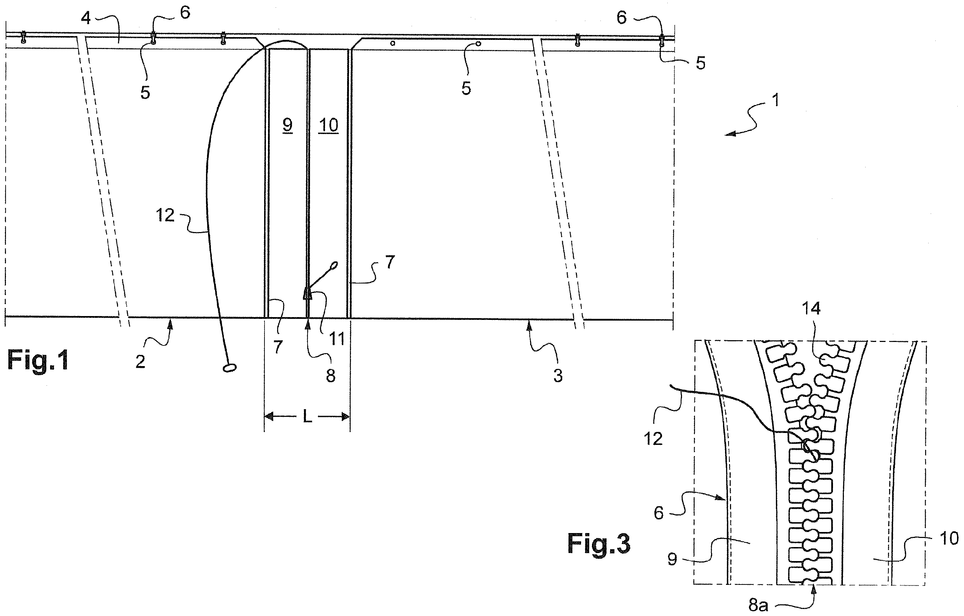

Comme illustré sur la figure 1, le conduit souple disjonctable d'aération 1 comprend une pluralité de tronçons assemblés entre eux. Plus particulièrement, une première section de tuyau 2 et une deuxième section de tuyau 3 sont montées en communication de fluide. Chaque section de tuyau 2, 3 peut être réalisée sous la forme d'une gaine tubulaire en matériau souple. Le matériau peut être étanche au gaz. Chaque section de tuyau peut être formée à partir d'une base rectangulaire d'un matériau en feuille, par exemple du polyester enduit de PVC. La base rectangulaire de matériau en feuille est ensuite fixée bord longitudinal sur bord longitudinal, par exemple par soudure, laissant dépasser un rebord 4. Dans le rebord 4, sont ménagés des oeillets 5. De manière générale, les oeillets 5 servent à la suspension du conduit d'aération par des crochets 6 eux-mêmes suspendus à des supports non représentés, par exemple des vis fixées dans le plafond d'une galerie ou d'un tunnel. Toutefois, certains oeillets 5 peuvent être libres et, c'est-à-dire dépourvus de crochets 6, comme il sera expliqué ci-après.

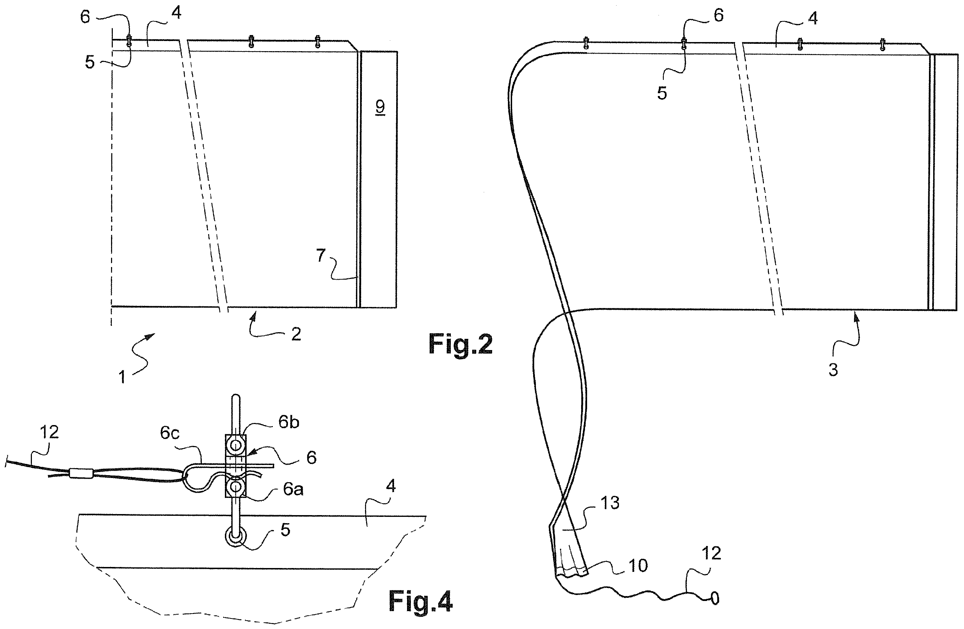

Dans le mode de réalisation illustré sur la figure 4, plusieurs crochets 6, par exemple un, deux ou trois, sont découplables. Le crochet 6 comprend une pièce mâle 6a montée solidaire de l'oeillet 5, une pièce femelle 6b et une goupille 6c. Un perçage est ménagé dans la pièce mâle 6a et un perçage est ménagé dans la pièce femelle 6b. Les perçages sont transversaux à un axe principal des pièces mâle 6a et femelle 6b. La goupille 6c est en place dans les perçages maintenant ainsi les pièces mâle 6a et femelle 6b couplées. Le retrait de la goupille 6c provoque le découplage des pièces mâle 6a et femelle 6b. La pièce mâle 6a tombe. La deuxième section de tuyau 3 est pourvue de crochets 6 découplables au voisinage de la première section de tuyau 2.

Une section de tuyau ainsi formée peut être maintenue avec une section sensiblement circulaire par une armature. L'armature, non représentée, peut présenter la forme d'une hélice offrant une certaine rigidité dans le sens radial du conduit et une élasticité dans le sens longitudinal notamment pour le déploiement de la section de tuyau. Dans un autre mode, l'armature se présente sous la forme d'une pluralité de tores permettant de trousser la section du tuyau ou de la déployer.

Comme illustré sur la figure 1, chaque section de tuyau 2, 3 est en regard de l'autre à une distance L de quelques centimètres ou dizaine de centimètres. Chaque section de tuyau 2, 3 comprend une fermeture séparable 7 à son extrémité en regard de l'autre section de tuyau 3, 2. La fermeture séparable peut être réalisée par un cerclage, avec ou sans collier, par des attaches à bandes auto-agrippantes, etc. On peut utiliser la fermeture séparable d'une section de tuyau déjà commercialisée de manière à conserver ou réutiliser une section de tuyau existante. La fermeture séparable est sensiblement étanche au gaz et peut être démontée lorsque le besoin s'en fait sentir, par exemple en fin de chantier. La notion d'étanchéité dépend de la nature des gaz transportés : gaz d'échappement, gaz d'explosion, gaz d'échappement de moteurs thermiques, gaz chargé en poussière, etc.

Un espace sensiblement cylindrique de longueur L sépare les extrémités des sections de tuyau 2 et 3. Chaque section de tuyau 2, 3 est munie d'une fermeture séparable 7. Dans ledit espace est monté un organe de liaison 8. L'organe de liaison 8, dans la position illustrée sur la figure 1, est attaché d'un côté à la section de tuyau 2 par la fermeture séparable 7 correspondante et du côté opposé à la section de tuyau 3 par la fermeture séparable 7 correspondante. L'organe de liaison 8 est également étanche relativement à un débit de ventilation en centaines de milliers de m³ par heure. L'organe de liaison 8 présente un contour fermé adapté au contour des sections de tuyaux 2, 3.

L'organe de liaison 8 comprend une première partie 9 attachée à la première section de tuyau 2 et une deuxième partie 10 attachée à la deuxième section de tuyau 3. Les première et deuxième parties 9 et 10 sont reliées ensemble par coopération de forme. Les première et deuxième parties 9 et 10 peuvent être reliées ensemble par une fermeture à crémaillère 8a, comme illustré sur la figure 3 ou par une fermeture à glissière non représentée. Dans ces deux modes, l'assemblage des dents de la crémaillère ou des parties mâles et femelles de la glissière est assuré par une navette 11 également dénommée curseur. La navette 11 permet l'engrènement des dents d'une crémaillère. La navette 11, dans le cas d'une glissière, permet l'entrée de la queue d'aronde mâle dans la forme correspondante femelle.

Dans la position de service du conduit d'aération 1, la navette 11 se situe dans le haut du conduit, près des oeillets 5 ou est retirée. Des organes de maintien de la fermeture peuvent alors être posés ou activés : agrafe, patte autocollante, patte à bouton pression, patte à bande auto agrippante, etc.

Dans un autre mode, la fermeture est à bande auto agrippante. La bande auto agrippante peut être choisie pour offrir une résistance élevée en cisaillement et faible en traction. La bande auto agrippante comprend une partie munie de crochets et une partie munie de boucles.

Le conduit d'aération 1 comprend également un fil de disjonction 12. Le fil 12 est ininflammable. Le fil 12 peut être métallique ou à base de fibres aramides. Le fil 12 peut être réalisé en acier. Le fil 12 peut présenter un diamètre compris entre 0,3 et 1 mm. Alternativement, le fil peut être réalisé en matériau synthétique, par exemple du polyéthylène.

Le fil 12 est fixé à une extrémité à l'une des parties de l'organe de liaison 8, par exemple la deuxième partie 10, à proximité de la première partie 9. Le fil 12 est relié à son extrémité opposée à une poignée disposée à hauteur d'homme dans la galerie, nettement en-dessous du conduit d'aération 1. Le fil 12 peut par exemple être fixé dans le bas de la deuxième partie 10 et, dans la position de service illustré sur la figure 1, faire saillie du conduit d'aération par le sommet, diamétralement à l'opposé du bas. Ainsi, en tirant sur la poignée, la tension dans le fil de disjonction 12 provoque la séparation de la fermeture à coulissement et l'écartement des première et deuxième parties 9 et 10 de l'organe de liaison 8. On peut ainsi parvenir à une séparation complète des première et deuxième sections de tuyaux 2 et 3.

Dans un mode de réalisation, il est prévu deux fils de disjonction 12 qui peuvent être fixés au même point de la deuxième partie 10 en zone inférieure, passés au travers de l'organe de liaison 8 entre les première et deuxième parties 9 et 10 en un point diamétralement opposé, au sommet, et pendre chacun d'un côté du conduit d'aération 1 de manière qu'une traction sur les deux fils provoque la séparation de l'organe de liaison en deux de façon relativement symétrique. On peut décaler les points de fixation pour optimiser la disjonction. Dans un mode à un seule fil, une partie du fil peut être fixée audit point de la deuxième partie 10 en zone inférieure et chaque brin passé au travers de l'organe de liaison 8 entre les première et deuxième parties 9 et 10 en un point diamétralement opposé, au sommet, pend d'un côté et de l'autre du conduit d'aération 1. On peut ainsi faire disjoncter l'organe de liaison 8 de manière plus aisée et plus rapide.

L'organe de liaison 8 peut comprendre une fermeture par cerclage ou clipsage. Le cerclage peut s'entendre d'un cercle pouvant se resserrer par levier ou cliquet autour d'un autre cercle de l'autre partie de l'organe de liaison. Le clipsage peut comprendre une pluralité de clips discrets. Le fil de disjonction est alors relié au levier ou aux clips.

La figure 2 montre l'état du conduit d'aération 1 à l'état disjoncté. La première section de tuyau 2 reste dans une position similaire à la position de service. La deuxième section de tuyau 3 voit son extrémité 13 voisine de la deuxième partie 10 de l'organe de liaison 8 tomber vers le bas, faute de soutien. En effet, les oeillets 5 de la deuxième section de tuyau 3 disposés au voisinage de la première section de tuyau 2 restent libres de support. En d'autres termes, les oeillets 5 de l'extrémité 13 représentée de la deuxième section de tuyau 3 sont libres. Ladite extrémité 13 de la deuxième section de tuyau 3 est tenue dans la position de service illustrée sur la figure 1, par l'organe de liaison 8. Une fois que l'organe de liaison 8 est disjoncté, ladite extrémité 13 pend librement et se sépare à la fois horizontalement et verticalement de la première section de tuyau 2 restée en place. Ainsi, dans le cas où la deuxième section de tuyau 3 est en feu, la disjonction de l'organe de liaison 8 avec éloignement des première et deuxième sections de tuyau 2 et 3, empêche la propagation du feu à la première section de tuyau 2. Ladite extrémité 13 peut être guidée par le fil 12, par exemple contre une paroi ou à l'opposé de la première section de tuyau 2 . Par ailleurs, la première section de tuyau 2 reste disponible pour une aspiration, dans le cas d'un conduit conçu pour supporter l'aspiration, et peut ainsi participer au désenfumage de la galerie ou du tunnel, désenfumage facilitant la progression des pompiers.

Sur la figure 3, la fermeture à crémaillère de l'organe de liaison 8 est visible en plus gros plan. La fermeture à crémaillère comprend des dents 14 paires appartenant à la première partie 9 et des dents 14 impaires appartenant à la deuxième partie 10. Les dents peuvent venir s'engrener sous l'effet du déplacement de la navette 11. Le fil de disjonction 12 est disposé derrière les dents. On entend par « derrière » le fait que le fil de disjonction 12 est tiré du côté opposé à la position où il se trouve. Le fil de disjonction 12 est tiré « devant » par opposition. Dans le mode illustré, le fil de disjonction 12 est sinueux, par exemple en demi-cercles, pour s'adapter à la forme des dents 14 et faciliter le désengrènement.

L'organe de liaison peut se présenter sous la forme d'un kit comprenant les première et deuxième parties et le fil de disjonction, le cas échéant avec une navette pour fermeture à glissière ou crémaillère. Le montage peut s'effectuer en fixant la première partie à une première section de tuyau en place et la deuxième partie à une deuxième section de tuyau, en place ou à mettre en place. Si la deuxième section de tuyau est préalablement en place, on procède au retrait de plusieurs crochets 6 de ladite deuxième section de tuyau au voisinage de la première section de tuyau. Le montage peut effectué avec l'organe de liaison 8 préassemblé, y compris un ou plusieurs organes de maintien en place. Le montage peut être effectué avec l'organe de liaison 8 non assemblé, les première et deuxième parties étant séparées.

L'activation du système de sécurité coupe-feu ainsi formé s'effectue par traction sur le ou les fils de disjonction. La fermeture entre les première et deuxième parties s'ouvre. Les première et deuxième parties se séparent, la deuxième partie tombant sous l'effet de sa masse et étant retenue, nettement plus bas, par la deuxième section de tuyau. L'écart entre les première et deuxième parties peut être supérieur au diamètre du conduit. Une aspiration pour désenfumage peut être effectuée par la première section de tuyau 2. La propagation de la combustion de la deuxième section de tuyau 3 est stoppée. La première section de tuyau 2 est préservée et peut être remise en service dès l'extinction de l'incendie. La deuxième section de tuyau 3 peut être remplacée. La deuxième partie 10 de l'organe de liaison 8 est réutilisée ou remplacée selon son état.

Les crochets 6 découplables peuvent être actionnés par le fil de disjonction 12. Dans ce cas, le fil de disjonction 12 est relié aux goupilles 6c correspondantes. La traction sur le fil de disjonction 12 arrache les goupilles 6c et découple les crochets 6 découplables, puis ouvre l'organe de liaison 8.

L'invention fournit un coupe-feu pour gaine souple de ventilation. Le coupe-feu forme organe de liaison entre deux sections de tuyau de la gaine. Le coupe-feu est séparable par lien souple. Le coupe-feu comprend deux parties présentant chacune un contour fermé et un système de fermeture séparable. Chaque partie est configurée pour être attachée à une section de tuyau de la gaine. Le coupe-feu comprend un élément d'activation, par exemple sous la forme d'un lien souple de séparation du système de fermeture séparable. L'élément d'activation est disposé en partie à l'intérieur et à proximité des deux parties. L'élément d'activation comprend une portion reliée à l'une des parties et une extrémité libre en saillie hors des deux parties. Une traction sur l'extrémité libre active la séparation et sépare le coupe-feu en deux sous ensembles distants.

## Revendications

1. Conduit d'aération souple disjonctable (1) comprenant une première et une deuxième sections (2, 3) de tuyau reliés entre elles, **caractérisé en ce qu'**il comprend un organe de liaison (8) à disjonction par câble, l'organe de liaison comprenant une première partie (9) présentant un contour fermé, lié à la première section, une deuxième partie (10) présentant un contour fermé, lié à la deuxième section, et un système de fermeture séparable (8a), l'organe de liaison comprenant un fil de disjonction (12) des première et deuxième parties par ouverture du système de fermeture, le fil étant disposé en partie à l'intérieur et à proximité des première et deuxième parties, le fil comprenant une portion reliée à la deuxième partie et une extrémité libre en saillie hors des première et deuxième parties, de façon qu'un opérateur sépare les première et deuxième parties de l'organe de liaison provoquant ainsi une séparation des première et deuxième sections de tuyau.

2. Conduit selon la revendication 1, dans lequel le fil (12) est ininflammable, préférablement à base de fibres aramides.

3. Conduit selon l'une des revendications précédentes, dans lequel l'organe de liaison (8) comprend une fermeture à crémaillère, une fermeture à glissière droite ou une fermeture à glissière spirale.

4. Conduit selon la revendication 1 ou 2, dans lequel l'organe de liaison comprend une fermeture par cerclage ou clipsage.

5. Conduit selon l'une des revendications précédentes,
dans lequel la deuxième section de tuyau est non supportée sur une longueur au moins égale à son diamètre, à partir de l'organe de liaison, la deuxième partie de l'organe de liaison étant également non supportée.

6. Conduit selon l'une des revendications 1 à 4, comprenant au moins un crochet à découplage supportant la deuxième section de tuyau au voisinage de la deuxième partie de l'organe de liaison, la deuxième partie de l'organe de liaison étant non supportée, ledit crochet étant à découplage commandé par ledit fil.

7. Conduit selon la revendication 3, comprenant au moins un organe de maintien d'une extrémité de l'organe de liaison, préférablement après retrait d'une navette de l'organe de liaison, le fil étant apte à arracher ledit au moins un organe de maintien de l'organe de liaison.

8. Conduit selon la revendication 7, comprenant au moins deux organes de maintien, l'un à chaque extrémité de l'organe de liaison, préférablement respectivement après engagement, retrait de la navette, le fil étant apte à arracher lesdites au moins deux organes de maintien de l'organe de liaison.

9. Conduit selon la revendication 7 ou 8, comprenant au moins une patte ou agrafe de maintien d'une extrémité de l'organe de liaison, préférablement après retrait de la navette, le fil étant apte à arracher ladite au moins une patte ou agrafe de maintien de l'organe de liaison.

10. Conduit selon l'une des revendications 7 à 9, dans lequel, à l'état fonctionnel assemblé, la navette est retirée.

11. Dispositif de séparation de conduit d'aération souple disjonctable (1), **caractérisé en ce qu'**il comprend :
- un organe de liaison (8) à disjonction par câble, ledit organe de liaison comprenant une première partie (9) et une deuxième partie (10), la première partie présentant un contour fermé étant équipée d'un élément de fixation à une première section (2) de tuyau, la deuxième partie présentant un contour fermé étant équipée d'un élément de fixation à une deuxième section (3) de tuyau, et un système de fermeture séparable (8a), et
- un fil de disjonction (12) des première et deuxième parties par ouverture du système de fermeture, disposé en partie à l'intérieur et à proximité des première et deuxième parties, le fil comprenant une extrémité reliée à la deuxième partie et une extrémité libre en saillie hors des première et deuxième parties, de façon que, l'organe de liaison étant en position de service, un opérateur sépare les première et deuxième parties de l'organe de liaison provoquant ainsi une séparation des première et deuxième sections de tuyau.

12. Dispositif selon la revendication précédente, comprenant un organe de maintien d'une extrémité de l'organe de liaison.

## Patentansprüche

1. Abnehmbare flexible Lüftungsleitung (1), umfassend einen ersten und einem zweiten Rohrabschnitt (2, 3), die miteinander verbunden sind, **dadurch gekennzeichnet, dass** sie ein durch ein Seil abnehmbares Verbindungsorgan (8) umfasst, wobei das Verbindungsorgan einen ersten Teil (9) umfasst, der eine geschlossene Umrandung aufweist, die mit dem ersten Abschnitt verbunden ist, einen zweiten Teil (10), der eine geschlossene Umrandung aufweist, die mit dem zweiten Abschnitt verbunden ist, und ein abtrennbares Verschlusssystem (8a), wobei das Verbindungsorgan eine Schnur zum Abnehmen (12) des ersten und zweiten Teils durch Öffnen des Verschlusssystems umfasst, wobei die Schnur teilweise im Innern und in der Nähe des ersten und des zweiten Teils angeordnet ist, wobei die Schnur einen Abschnitt umfasst, der mit dem zweiten Teil verbunden ist, und ein freies Ende, das aus dem ersten und zweiten Teil vorsteht, so dass ein Bediener den ersten und den zweiten Teil des Verbindungsorgans trennt, wodurch eine Trennung des ersten und des zweiten Rohrabschnitts hervorgerufen wird.

2. Leitung nach Anspruch 1, wobei die Schnur (12) feuerfest ist, bevorzugt auf Aramidfaserbasis.

3. Leitung nach einem der vorhergehenden Ansprüche, wobei das Verbindungsorgan (8) einen Zahnreißverschluss, einen Schwalbenschwanzreißverschluss oder einen Spiralreißverschluss umfasst.

4. Leitung nach Anspruch 1 oder 2, wobei das Verbindungsorgan einen Verschluss durch Umreifung oder Einrastung umfasst.

5. Leitung nach einem der vorhergehenden Ansprüche,wobei der zweite Rohrabschnitt auf einer Länge von mindestens gleich seinem Durchmesser ab dem Verbindungsorgan nicht abgestützt ist, wobei der zweite Teil des Verbindungsorgans ebenfalls nicht abgestützt ist.

6. Leitung nach einem der Ansprüche 1 bis 4, umfassend mindestens einen Entkopplungshaken, der den zweiten Rohrabschnitt in der Nähe des zweiten Teils des Verbindungsorgans abstützt, wobei der zweite Teil des Verbindungsorgans nicht abgestützt ist, wobei die Entkopplungshaken von der Schnur gesteuert wird.

7. Leitung nach Anspruch 3, umfassend mindestens ein Halteorgan eines Endes des Verbindungsorgans, bevorzugt nach dem Zurückziehen eines Schiebers des Verbindungsorgans, wobei die Schnur geeignet ist, das mindestens eine Halteorgan von dem Verbindungsorgan abzureißen.

8. Leitung nach Anspruch 7, umfassend mindestens zwei Halteorgane, das eine an jedem Ende des Verbindungsorgans, bevorzugt jeweils nach Eingreifen, Zurückziehen des Schiebers, wobei die Schnur geeignet ist, die mindestens zwei Halteorgane vom Verbindungsorgan abzureißen.

9. Leitung nach Anspruch 7 oder 8, umfassend mindestens eine Haltelasche oder -klammer an einem Ende des Verbindungsorgans, bevorzugt nach dem Zurückziehen des Schiebers, wobei die Schnur geeignet ist, die mindestens eine Haltelasche oder -klammer von dem Verbindungsorgan abzureißen.

10. Leitung nach einem der Ansprüche 7 bis 9, wobei, in zusammengesetztem funktionsfähigem Zustand, der Schieber zurückgezogen ist.

11. Vorrichtung zum Trennen der abnehmbaren flexiblen Lüftungsleitung (1), **dadurch gekennzeichnet, dass** sie Folgendes umfasst:
- ein durch ein Seil abnehmbares Verbindungsorgan (8), wobei das Verbindungsorgan einen ersten Teil (9) und einen zweiten Teil (10) umfasst, wobei der erste Teil eine geschlossene Umrandung aufweist, die mit einem Element zur Befestigung an einem ersten Rohrabschnitt (2) ausgestattet ist, wobei der zweite Teil eine geschlossene Umrandung aufweist, die mit einem Element zur Befestigung an einem zweiten Rohrabschnitt (3) ausgestattet ist, und ein trennbares Verschlusssystem (8a), und
- eine Schnur (12) zum Abnehmen des ersten und zweiten Teils durch Öffnen des Verschlusssystems, die teilweise im Innern und in der Nähe des ersten und zweiten Teils angeordnet ist, wobei die Schnur ein Ende umfasst, das mit dem zweiten Teil verbunden ist und ein freies Ende, das von dem ersten und dem zweiten Teil vorsteht, so dass, wenn sich das Verbindungsorgan in Betriebsstellung befindet, ein Bediener den ersten und den zweiten Teil des Verbindungsorgans trennt, wodurch eine Trennung des ersten und des zweiten Rohrabschnitts hervorgerufen wird.

12. Vorrichtung nach dem vorhergehenden Anspruch, umfassend ein Halteorgan an einem Ende des Verbindungsorgans.

## Claims

1. Disconnectable flexible aeration duct (1) comprising a first and a second pipe section (2, 3) connected to one another, **characterized in that** it comprises a connecting member (8) with disconnection by cable, the connecting member comprising a first part (9) having a closed contour connected to the first section, a second part (10) having a closed contour connected to the second section, and a separable closure system (8a), the connecting member comprising a thread (12) for disconnecting the first and second parts by opening the closure system, the thread being arranged in part inside and in the vicinity of the first and second parts, the thread comprising a portion connected to the second part and a free end projecting outside the first and second parts, in such a way that an operator separates the first and second parts of the connecting member, thus causing a separation of the first and second pipe sections.

2. Duct according to Claim 1, in which the thread (12) is non-flammable, preferably based on aramid fibres.

3. Duct according to one of the preceding claims, in which the connecting member (8) comprises a rack closure, a straight zipper closure or a spiral zipper closure.

4. Duct according to Claim 1 or 2, in which the connecting member comprises a strapping or clipping closure.

5. Duct according to one of the preceding claims, in which the second pipe section is unsupported over a length at least equal to its diameter, starting from the connecting member, the second part of the connecting member likewise being unsupported.

6. Duct according to one of Claims 1 to 4, comprising at least one uncoupling hook supporting the second pipe section in the vicinity of the second part of the connecting member, the second part of the connecting member being unsupported, said hook being one whose uncoupling is controlled by said thread.

7. Duct according to Claim 3, comprising at least one member for retaining an end of the connecting member, preferably after removal of a shuttle of the connecting member, the thread being able to pull out said at least one member for retaining the connecting member.

8. Duct according to Claim 7, comprising at least two retaining members, one at each end of the connecting member, preferably respectively after engagement and removal of the shuttle, the thread being able to pull out said at least two members for retaining the connecting member.

9. Duct according to Claim 7 or 8, comprising at least one bracket or staple for retaining an end of the connecting member, preferably after removal of the shuttle, the thread being able to pull out said at least one bracket or staple for retaining the connecting member.

10. Duct according to one of Claims 7 to 9, in which, in the assembled functional state, the shuttle is withdrawn.

11. Device for separating a disconnectable flexible aeration duct (1), **characterized in that** it comprises:
- a connecting member (8) with disconnection by cable, said connecting member comprising a first part (9) and a second part (10), the first part having a closed contour being equipped with an element for fastening to a first pipe section (2), the second part having a closed contour being equipped with an element for fastening to a second pipe section (3), and a separable closure system (8a), and
- a thread (12) for disconnecting the first and second parts by opening the closure system, which is arranged in part inside and in the vicinity of the first and second parts, the thread comprising an end connected to the second part and a free end projecting outside the first and second parts, in such a way that, with the connecting member in a service position, an operator separates the first and second parts of the connecting member, thus causing a separation of the first and second pipe sections.

12. Device according to the preceding claim, comprising a member for retaining an end of the connecting member.
